# EUROPÄISCHE PATENTSCHRIFT

(11) **EP 2 364 882 B1**
(45) Veröffentlichungstag und Bekanntmachung des Hinweises auf die Patenterteilung: **24.10.2012**
(21) Anmeldenummer: 10305241.1
(22) Anmeldetag: 12.03.2010
(51) Int. Cl.: B60R 16/027

(54) **Anordnung zum elektrischen Verbinden von zwei elektrischen Kontaktstellen**
Assembly for electrically linking two electric contact points
Agencement destiné à la connexion électrique de deux points de contact électriques

(43) Veröffentlichungstag der Anmeldung: 14.09.2011
(73) Patentinhaber: Nexans, 75008 Paris (FR)
(72) Erfinder: Schröer, Frank, 92637, Weiden (DE); Huscher, Rainer, 95679, Waldershof (DE); Krapf, Stefan, 92696, Flossenbürg (DE)
(74) Vertreter: Döring, Roger

(56) Entgegenhaltungen:
- DE-A1- 19 713 573
- JP-A- 4 201 640
- JP-A- 2005 329 890

## Beschreibung

Die Erfindung bezieht sich auf eine Anordnung gemäß dem Oberbegriff des Patentanspruchs 1.

Die DE 199 00 083 A1 beschreibt eine derartige Anordnung.

Eine solche Anordnung wird beispielsweise zum elektrischen Verbinden von Funktionselementen benötigt, die im oder am Lenkrad eines Kraftfahrzeugs angebracht sind. Solche Funktionselemente sind beispielsweise Schalter für Lautsprecher und eine Telefonanlage sowie für Blinker, Scheibenwischer und eine Hupe. Auch der Auslösemechanismus für einen Airbag ist in der Regel am Lenkrad angebracht. Die elektrische Verbindung einer derartigen Anordnung ist in heutiger Technik durchgehend, ohne schleifende elektrische Kontakte ausgeführt. Es wird in bekannter Technik eine in Windungen verlaufende Flachband-Leitung eingesetzt, welche der Drehbewegung des Lenkrades durch Änderung der Lage ihrer Windungen folgen kann.

Durch die EP 0 417 350 A1 ist beispielsweise eine Anordnung zur Stromübertragung mittels einer nach Art eines Federhauses einer Uhr zu einem Wickelkörper gewickelten FBL bekanntgeworden. Bei einer relativen Drehbewegung der beiden durch die FBL verbundenen Kontaktstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf.

Aus der EP 0 735 631 B1 geht eine andere Anordnung zur Stromübertragung hervor, bei welcher die in einer Kassette befindliche Flachband-Leitung in zwei Teilwicklungen mit gegenläufigem Wickelsinn und einer U-förmigen Umkehrstelle aufgeteilt ist, zwischen denen ein ringförmiger Führungskörper angeordnet ist. Die Umkehrstelle zwischen den Teilwicklungen greift in den Führungskörper ein, der bei einer Drehbewegung eines Lenkrades, in welchem die Anordnung angebracht ist, von den sich bewegenden Teilwicklungen in Umfangsrichtung der Kassette mitgenommen wird. Der Führungskörper dient zur Führung und zur gegenseitigen Abstützung der Teilwicklungen. Er gleitet bei Betätigung der Anordnung auf einem entsprechend ausgebildeten Boden der Kassette.

Die DE 197 13 573 A1 beschreibt ein System zur elektrischen Versorgung von Einrichtungen zur Aktivierung von Airbags. In diesem System ist eine Lenkwelle eingesetzt, die aus zwei ineinander angeordneten Teilen zusammengesetzt ist, und zwar einer an sich hohlen, aufnehmenden Welle und einer dieselbe auf einer wesentlichen Länge in der Nähe eines Lenkrads verschließenden, aufgenommenen Welle. Die beiden Wellen sind mittels einer Schraube fest miteinander verbunden. Um das dem Lenkrad zugewandte Ende der aufnehmenden Welle ist außen auf einer relativ kurzen Länge ein Band bzw. eine elektrische Leitung herumgewickelt. Das Band bzw. die Leitung ist mit einem Ende durch ein Loch in der aufgenommenen Welle in dieselbe hineingeführt und mit dem anderen Ende in radialer Richtung durch eine Öffnung eines die Lenkwelle umgebenden Außenrohres nach außen geführt.

Bei der bekannten Anordnung nach der eingangs erwähnten DE 199 00 083 A1 ist in der hohlen Lenkwelle eines Kraftfahrzeugs eine elektrische Leitung mit geradlinigem Verlauf angebracht, die an einem Ende mit einer ersten, im Bereich des mit der Lenkwelle verbundenen Lenkrades angebrachten Kontaktstelle und an ihrem anderen Ende mit einer zweiten, an dem dem Lenkrad abgewandten Ende der Lenkwelle verbunden ist. Die Leitung besteht aus flexiblem Material und ihre Länge ist so groß, daß ihre Verformung im Drehbereich des Lenkrades ausschließlich elastisch erfolgt. Bei einer Drehung des Lenkrades wird die Leitung um ihre Achse tordiert, so daß trotz der geschilderten Ausführung derselben eine Beschädigung insbesondere an den Kontaktstellen nicht ausgeschlossen werden kann.

Der Erfindung liegt die Aufgabe zugrunde, die eingangs geschilderte Anordnung so zu gestalten, daß ihre Funktionssicherheit erhöht ist.

Diese Aufgabe wird entsprechend den kennzeichnenden Merkmalen des Patentanspruchs 1 gelöst.

Die Flachleiter-Bandleitung - im folgenden kurz "FL-BL" genannt - wird bei dieser Anordnung im Betrieb eines Kraftfahrzeugs nur unwesentlich mechanisch belastet. Eine Beschädigung der FL-BL und auch der beiden Kontaktstellen kann daher bei normaler bzw. sachgerechter Handhabung ausgeschlossen werden. Die Windungen der FL-BL werden bei einer Drehung des Lenkrades in der einen Drehrichtung aufgeweitet, wobei die FL-BL geringfügig in radialer Richtung vom Strang wegbewegt wird, um den sie herumgewickelt ist. In der anderen Drehrichtung des Lenkrades legt die FL-BL sich enger an den Strang an. Diese Bewegungen der FL-BL werden bei ihrem Einbau in die Lenkwelle mit einer Art Nullstellung berücksichtigt, aus der heraus die Windungen derselben nicht nur auf einen größeren Durchmesser aufgehen, sondern sich auch problemlos in Richtung des Stranges verengen können. Dabei ist zu berücksichtigen, daß das Lenkrad in beiden Drehrichtungen beispielsweise zwei Umdrehungen ausführt, so daß die Bewegungen der Windungen der FL-BL in beiden beschriebenen Richtungen sehr klein sind. Um die FL-BL herum ist mit Abstand zu derselben ein vorzugsweise aus Isoliermaterial bestehendes Rohr angeordnet, das innen an der Lenkwelle anliegt. Es dient zur Vermeidung von Geräuschen, die beim Auftreffen der FL-BL auf die Lenkwelle entstehen könnten.

Das an der Lenkwelle anliegende Rohr kann mit Vorteil auf seiner der FL-BL zugewandten Seite mit geräuschdämmendem Material beschichtet sein.

Der Strang, welcher als Stab oder Rohr ausgeführt sein kann, kann vorzugsweise auf seiner äußeren Oberfläche ebenfalls mit geräuschdämmendem Material beschichtet sein.

Ausführungsbeispiele des Erfindungsgegenstandes sind in den Zeichnungen dargestellt.

Es zeigen:
Fig. 1 die Anordnung nach der Erfindung in schematischer Darstellung.
Fig. 2 einen Ausschnitt aus Fig. 1 in vergrößerter Darstellung.
Fig. 3 und 4 zwei Einzelheiten der Anordnung nach Fig. 1.
Fig. 5 eine gegenüber Fig. 2 ergänzte Ausführungsform der Anordnung.

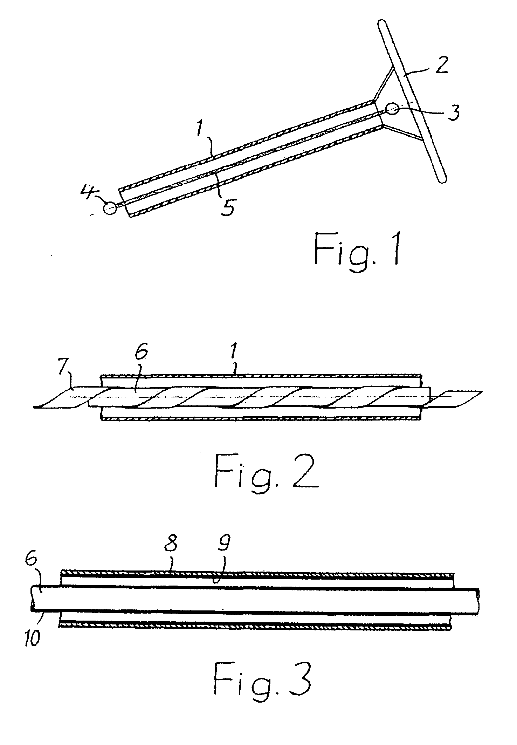

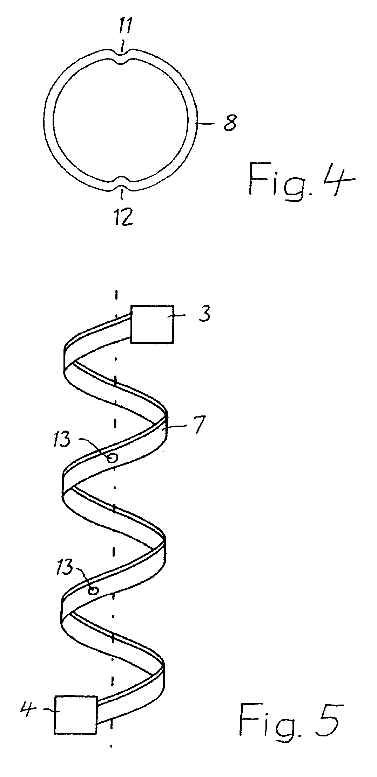

In Fig. 1 ist eine hohle, aus Metall bestehende Lenkwelle 1 eines Kraftfahrzeugs im Schnitt dargestellt, an deren erstem Ende ein Lenkrad 2 montiert ist. Das zweite Ende der Lenkwelle 1 ist in Gebrauchslage mit einem der Einfachheit halber nicht mit dargestellten Lenkmechanismus des Kraftfahrzeugs verbunden. Im Bereich des Lenkrades 2 ist eine zusammen mit demselben um die Achse der Lenkwelle 1 drehbare erste elektrische Kontaktstelle 3 angebracht. Am zweiten Ende der Lenkwelle 1 ist eine zweite elektrische Kontaktstelle 4 montiert, und zwar an feststehenden Teilen des Kraftfahrzeugs. Beide Kontaktstellen 3 und 4 sind durch eine in Fig. 1 nur angedeutete elektrische Leitung 5 miteinander verbunden. Ihre tatsächliche Form und Anordnung gehen aus den in den Fig. 2 und 5 dargestellten Ausführungsbeispielen hervor.

Zentrisch in der Lenkwelle 1 angeordnet ist ein langgestreckter Strang 6, der mechanisch stabil und durch einen umlaufenden Freiraum von der Lenkwelle 1 getrennt ist. Er kann einteilig oder auch teleskopartig ausgeführt sein und besteht mit Vorteil aus Kunststoff, wie beispielsweise Polybutylenterephthalat (PBT), Polycarbonat (PC) oder Polyoximethylen (PCM). Der Strang 6 kann aber auch aus Metall bestehen. Er hat vorzugsweise einen kreisrunden Querschnitt. Er könnte aber auch oval oder als Polygon ausgeführt sein. Der Strang 6 kann ein massiver Stab oder ein Rohr sein. Er ist mit der Lenkwelle 1 bzw. mit dem Lenkrad 2 mechanisch gekoppelt, so daß er bei einer Drehung des Lenkrades 2 gemeinsam mit der Lenkwelle 1 gedreht wird.

Als elektrische Leitung 5 ist gemäß Fig. 2 mindestens eine Flachleiter-Bandleitung 7 - im folgenden weiter "FL-BL7" genannt - um den Strang 6 herumgewickelt, und zwar mit Lücken zwischen ihren Windungen bzw. mit langem Schlag. Die Steigung bzw. Schlaglänge der FL-BL 7 liegt beispielsweise bei einer Breite derselben zwischen 10 mm und 18 mm bei 12 mm bis 30 mm. Die FL-BL 7 muß dabei immer so ausgeführt und gewickelt sein, daß eine Lücke zwischen ihren Windungen verbleibt. So beträgt die Breite der Lücke zwischen den Windungen einer FL-BL 7 beispielsweise 10 mm, wenn die FL-BL eine Breite von 15 mm hat und die Steigung bei 25 mm liegt. Die FL-BL 7 hat eine Anzahl von flachen elektrischen Leitern, die parallel und mit Abstand zueinander in Isoliermaterial eingebettet sind. Die elektrischen Leiter der FL-BL 7, die vorzugsweise aus Kupfer bestehen, sind bei montierter Anordnung mit den elektrischen Kontakten der Kontaktstellen 3 und 4 elektrisch leitend verbunden.

Im Einbauzustand, also in der Ruhestellung bzw. einer Nullstellung, ist die FL-BL 7 lose um den Strang 6 herumgewickelt, so daß sich ihre Windungen bei einer entsprechenden Drehung des Lenkrades 2 verengen und an den Strang 6 anlegen können. Die Anzahl der Windungen der FL-BL 7 ist durch den langen Schlag, mit dem sie um den Strang 6 herumgewickelt ist, relativ niedrig, so daß bei einer Drehung des Lenkrades 2, bei welcher die FL-BL 7 über die Kontaktstelle 3 an ihrem dortigen Ende mitgenommen wird, ihre radiale Bewegung in beiden Richtungen - vom Strang 6 weg und auf den Strang 6 zu - relativ gering ist. Es kann bereits dadurch mit einiger Sicherheit ausgeschlossen werden, daß die FL-BL 7 beim Betrieb des Kraftfahrzeugs mit entsprechender Geräuschentwicklung an die Lenkwelle 1 schlägt.

Um derartige Geräusche, die beim Auftreffen der FL-BL 7 auf die Lenkwelle 1 entstehen könnten mit erhöhter Sicherheit auszuschließen, ist in der Lenkwelle 1 ein aus elastischem Isoliermaterial bestehendes Rohr 8 angebracht, das innen an der Lenkwelle 1 anliegt. Das Rohr 8 kann auch aus Metall bestehen. Auf der inneren Oberfläche des Rohres 8, also auf seiner in Richtung der FL-BL 7 weisenden Oberfläche, kann zusätzlich eine Schicht 9 aus einem geräuschdämmenden Material angebracht sein. Auch auf der äußeren Oberfläche des Stranges 6 kann vorzugsweise eine Schicht 10 aus einem geräuschdämmenden Material aufgebracht sein. Der entsprechende Aufbau von Rohr 8 und Strang 6 geht aus Fig. 3 hervor, in welcher die FL-BL 7 nicht mit eingezeichnet ist. Als geräuschdämmendes Material können beispielsweise Polyesterfasern eingesetzt werden.

Bei der Montage der Anordnung in der hohlen Lenkwelle 1 wird das Rohr 8 mit Vorteil als erstes montiert. Das aus elastischem Material bestehende Rohr 8 hat gemäß Fig. 4 mindestens zwei einander diametral gegenüber liegende nutenartige Eindellungen 11 und 12, die sich über seine ganze Länge erstrecken. Es kann dadurch auf verkleinerte radiale Abmessungen zusammengedrückt und relativ einfach in die Lenkwelle 1 eingeschoben werden. Das Rohr 8 legt sich abschließend aufgrund seiner Elastizität an die Innenwandung der Lenkwelle 1 an.

Als elektrische Leitung 5 wird mindestens eine FL-BL 7 um den Strang 6 herumgewickelt. Wenn eine erhöhte Anzahl von Einzelkontakten der Kontaktstellen 3 und 4 elektrisch leitend verbunden werden soll, können auch zwei oder mehr FL-BLen 7 eingesetzt werden. Sie werden zweckmäßig zu einem einteiligen Gebilde zusammengefaßt und können dazu gemäß Fig. 5 in ihrem Verlauf an Stellen 13, die einen ausreichenden Abstand voneinander haben, punktuell mechanisch fest miteinander verbunden werden. Die Verbindung kann beispielsweise durch Kleben, Schweißen, Nieten oder Umklammern hergestellt werden. Wenn mehr als zwei FL-BLen 7 eingesetzt werden, können je zwei FL-Blen 7 auch an gegeneinander versetzten Stellen punktuell miteinander verbunden werden.

## Patentansprüche

1. Anordnung zum elektrischen Verbinden von zwei elektrischen Kontaktstellen, die sich in einem Kraftfahrzeug befinden, von denen eine erste Kontaktstelle an einem drehbaren Bauteil des Kraftfahrzeugs angebracht ist, während eine zweite Kontaktstelle an feststehenden Teilen des Kraftfahrzeugs montiert ist, und welche durch eine in einer hohlen Lenkwelle des Kraftfahrzeugs angeordnete elektrische Leitung miteinander verbunden sind, bei welcher die erste Kontaktstelle im Bereich eines mit der Lenkwelle verbundenen Lenkrades des Kraftfahrzeugs angeordnet ist, während die zweite Kontaktstelle sich im Bereich des vom Lenkrad entfernten Endes der Lenkwelle befindet, **dadurch gekennzeichnet,**
- **daß** zentrisch in der Lenkwelle (1) ein mechanisch stabiler, mit der Lenkwelle (1) Koppelbarer Strang (6) angebracht ist, der sich über deren ganze Länge erstreckt und durch einen umlaufenden Freiraum von derselben getrennt ist, und um welchen als elektrische Leitung (5) mindestens eine Flachleiter-Bandleitung (7) mit Lücke zwischen den Windungen herumgewickelt ist, und
- **daß** um die Flachleiter-Bandleitung (7) herum mit Abstand zu derselben ein vorzugsweise aus Isoliermaterial bestehendes Rohr (8) angebracht ist, das innen an der Lenkwelle (1) anliegen kann.

2. Anordnung nach Anspruch 1, **dadurch gekennzeichnet, daß** das Rohr (8) auf seiner der Flachleiter-Bandleitung (7) zugewandten Oberfläche mit einer Schicht (9) aus einem geräuschdämmenden Material versehen ist.

3. Anordnung nach Anspruch 1 oder 2, **dadurch gekennzeichnet, daß** auf der äußeren Oberfläche des Strangs (6) eine Schicht (10) aus einem geräuschdämmenden Material angebracht ist.

4. Anordnung nach einem der Ansprüche 1 bis 3, **dadurch gekennzeichnet, daß** der Strang (6) ein Stab ist.

5. Anordnung nach einem der Ansprüche 1 bis 3, **dadurch gekennzeichnet, daß** der Strang (6) ein Rohr ist.

6. Anordnung nach einem der Ansprüche 1 bis 5, **dadurch gekennzeichnet, daß** beim Einsatz von zwei oder mehr Flachleiter-Bandleitungen (7) dieselben in ihrem Verlauf punktuell mechanisch fest miteinander verbunden sind.

7. Anordnung nach einem der Ansprüche 1 bis 6, **dadurch gekennzeichnet, daß** das die Flachleiter-Bandleitung (7) umgebende Rohr (8) aus elastischem Material besteht.

8. Anordnung nach Anspruch 7, **dadurch gekennzeichnet, daß** das Rohr (8) mindestens zwei einander diametral gegenüber liegende, sich über seine ganze axiale Länge erstreckende, nutenartige Eindellungen (11, 12) aufweist.

## Claims

1. A device for the electrical connection of two contact points, which are positioned within a motorcar, a first connecting pointbeing mounted at a rotatable element of the motor car while the second contactpointisfastened to stationary elements of the motorcar,and which are connected to eachotherby an electrical line, which is mounted within a hollow steering column of the motor car, wherein the first contact point is positioned in the area of a steering wheel of the motor car which is c o nne c te d to the ste e ring c o lumn, while the se c o nd contact point is provided in the area of the end of the steering column facing away from the steering wheel, **characterized in**
- **that** centrically within the steering column (1) is mounted a mechanically stable rod (6) which is connectable to the steering column (1) and which runs over the whole length of the same and around which as the electrical line (5) at least one flat conductor line (7) is wound with a gap between the windings, and
- **that** a round the flat conductor line (7) with distance to the same a tube (8) preferably consisting of insulation material is mounted, which can abut to the inner surface of the steering c o lumn (1).

2. A device according to claim 1, **characterized in that** tube (8) has a layer (9) consisting of an antinoise material on its surface which faces the flat conductor line (7).

3. A device according to claim 1 or 2, characterized that at the outer surface of the rod (6) a layer (10) is provided which consists of an antinoise material.

4. A device according to one of the claims 1 to 3, **characterized in that** the rod (6) is a bar.

5. A device according to one of the claims 1 to 3, **characterized in that** the rod (6) is a tube.

6. A device according to one of the claim 1 to 5, **characterized in that** by use of two or more flat conductor lines (7) these lines a connected mechanically to each other at different points of their length.

7. A device according to one of the claim 1 to 6, **characterized in that** the tube (8) which surrounds the flat conductor line (7) consists of an elastic material.

8. A device according to claim 7, **characterized in that** the tube (8) has at least two groove like depressions (11,12) which are positioned diametrically opposite to each other and run over the whole axial length of the tube.

## Revendications

1. Arrangement pour relier électriquement deux points de contact électriques qui se trouvent dans un véhicule automobile, dont un premier point de contact est monté sur un composant rotatif du véhicule automobile, alors qu'un deuxième point de contact est monté sur des pièces fixes du véhicule automobile, et lesquels sont reliés entre eux par un câble électrique disposé dans un arbre de direction creux du véhicule automobile, avec lequel le premier point de contact est disposé dans la zone d'un volant de direction du véhicule automobile relié avec l'arbre de direction, alors que le deuxième point de contact se trouve dans la zone de l'extrémité de l'arbre de direction qui est éloignée du volant de direction, **caractérisé en ce**
- **qu'**une barre (6) mécaniquement stable et pouvant être accouplée avec l'arbre de direction (1) est montée de manière centrée dans l'arbre de direction (1), laquelle s'étend sur toute sa longueur et est séparée de celui-ci par un espace libre périphérique et autour duquel est enroulé au moins un câble en nappe (7) faisant office de câble électrique (5) avec des interstices entre les enroulements, et
- **qu'**un tube (8) constitué de préférence de matériau isolant est monté autour du câble en nappe (7) avec un écart par rapport à celui-ci, lequel peut reposer à l'intérieur contre l'arbre de direction (1).

2. Arrangement selon la revendication 1, **caractérisé en ce que** le tube (8) est muni d'une couche (9) en matériau insonorisant sur sa surface qui fait face au câble en nappe (7).

3. Arrangement selon la revendication 1 ou 2, **caractérisé en ce qu'**une couche (10) en un matériau insonorisant est appliquée sur la surface extérieure de la barre (6).

4. Arrangement selon l'une des revendications 1 à 3, **caractérisé en ce que** la barre (6) est un barreau.

5. Arrangement selon l'une des revendications 1 à 3, **caractérisé en ce que** la barre (6) est un tube.

6. Arrangement selon l'une des revendications 1 à 5, **caractérisé en ce que** lors de l'utilisation de deux câbles en nappe (7) ou plus, ceux-ci sont reliés mécaniquement à demeure entre eux ponctuellement dans leur tracé.

7. Arrangement selon l'une des revendications 1 à 6, **caractérisé en ce que** le tube (8) qui entoure le câble en nappe (7) est constitué d'un matériau souple.

8. Arrangement selon la revendication 7, **caractérisé en ce que** le tube (8) présente au moins deux empreintes (11, 12) de type rainure diamétralement opposées l'une à l'autre qui s'étendent sur toute sa longueur axiale.
